# EUROPEAN PATENT APPLICATION

(11) **EP 2 169 223 A2**
(43) Date of publication of application: **31.03.2010**
(21) Application number: 09170408.0
(22) Date of filing: 16.09.2009
(51) Int. Cl.: F03D 11/00

(54) **Cable tray for a wind turbine tower**

(30) Priority: 29.09.2008 US 240167
(71) Applicant: General Electric Company, Schenectady, NY 12345 (US)
(72) Inventor: Defranco, Timothy J., Malta, NY 12020 (US); Vailles, Christian, Quebec Québec G1W-3GB (CA); Doucet, Louis G., Quebec G1X-4L5 (CA); McClure, Michael G, Albany, NY 12206 (US); Lord, Normand, Lac Beauport Québec G3B-1Z5 (CA)
(74) Representative: Bedford, Grant Richard

(57) **Abstract**

A cable tray (32) for a wind turbine (2) tower (4) includes a first section (34); a second section (36) spaced apart from the first section (34); and an elastomer member (38) connecting the first section (34) to the second section (36).

## Description

The subject matter described here relates to cable trays, and, more particularly, to a cable tray for a wind turbine.

A wind turbine is a machine for converting the kinetic energy in wind into mechanical energy. If the mechanical energy is used directly by the machinery, such as to pump water or to grind wheat, then the wind turbine may be referred to as a windmill. Similarly, if the mechanical energy is converted to electricity, then the machine may also be referred to as a wind generator or wind power plant.

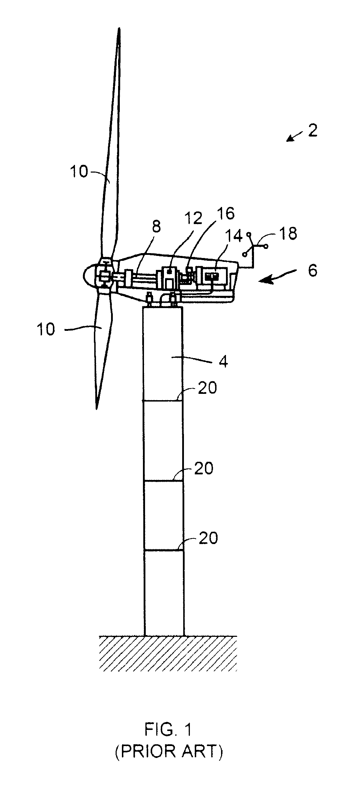

Wind turbines are typically categorized according to the vertical or horizontal axis about which the blades rotate. One so-called horizontal-axis wind generator is schematically illustrated in Figure 1 and available from General Electric Company. This particular configuration for a wind turbine 2 includes a tower 4 supporting a nacelle 6 enclosing a drive train 8. The blades 10 are arranged on a hub to form a "rotor" at one end of the drive train 8 outside of the nacelle 6. The rotating blades 10 drive a gearbox 12 connected to an electrical generator 14 at the other end of the drive train 8 arranged inside the nacelle 6 along with a control system 16 that receives input from an anemometer 18.

The wind turbine tower 4 is typically constructed by rolling arcuate sheets of steel and securing the end of those sheets together to form closed rings. The rings are then stacked on top of each other to form the length of the tower. These rings typically have different thicknesses, with the plates getting thinner toward the top of the tower. The rings may also have different shapes, changing from cylindrical to conical as one moves up the tower. Due to the large size of the finished tower 4, and the logistical constraints against transporting such a large structure, it is impractical to assemble the entire tower 4 before it is shipped to the installation site. Therefore, as discussed in commonly-owned co-pending U.S. Application Serial No. 11/969,463 (Attorney Docket No. 229524) for "Wind Turbine Tower Joints," multiple, prefabricated ringed tower wall sections will often be shipped and then welded and/or flanged to each other at various joints 20 in wall of the tower 4.

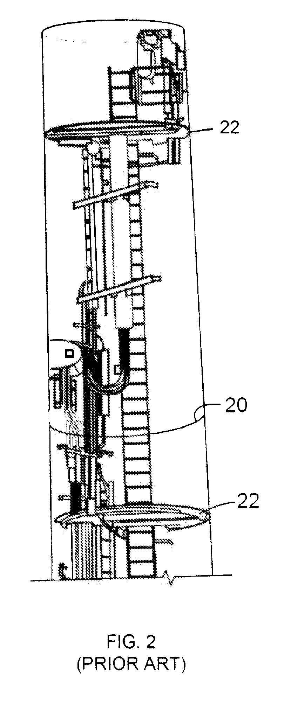

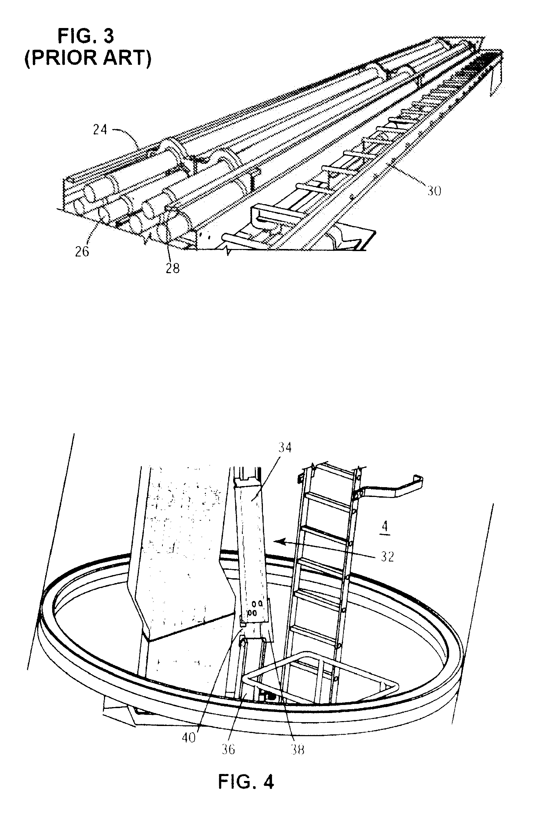

As illustrated in the partial interior view of the tower 4 shown in Figure 2, platforms 22 may be arranged inside the tower 4 for personnel to stand upon while performing various installation, operation, and maintenance tasks. For example, where the joints 20 that are provided with bolted flanges, those bolts must be periodically inspected and/or tightened. However, access to some portions of those bolted joints 20 in the wall the tower 4 may be obstructed by one or more cables and buss bars extending along the wall of the tower. Unless properly secured to the tower 4, the cables and/or buss bars may also become damaged when they slide and/or vibrate against the joints 20. Therefore, as illustrated in FIG. 3, the tower 4 is typically provided with a buss bar tray 24 for supporting buss bars 26 and ground bar 28, along with a cable ladder 30 for supporting cables (not shown), such as communications cables from the nacelle 6 at the top of the tower.

Various drawbacks associated with such conventional approaches are addressed herein by providing, in various embodiments, a cable tray for a wind turbine tower, including a first section; a second section spaced apart from the first section; and an elastomer connecting the first section to the second section.

Various aspects of this technology will now be described with reference to the following figures ("FIGs.") which are not necessarily drawn to scale, but use the same reference numerals to designate corresponding parts throughout each of the several views.

FIG. 1 is a schematic side view of a conventional wind generator.

FIG. 2 is partial interior view of the wind turbine tower shown in FIG. 1.

FIG. 3 is a schematic orthographic a buss bar tray and cable ladder for use with the wind turbine shown in FIGs. 1 and 2.

FIG. 4 is schematic orthographic view of a cable tray in a wind turbine tower.

FIG. 5 is an enlarged orthographic view of a portion of the cable tray in FIG. 4.

FIG. 6 is an orthographic view of one section of the cable tray shown in FIG. 5.

FIG. 7 is an enlarged orthographic view of a portion of the cable tray shown in FIG. 6.

FIG. 8. is a partial cross-section taken along section line VIII-VIII in FIG. 6.

FIG. 9 is a plan view of the elastomer member shown in FIG. 4.

FIG. 4 is schematic orthographic view of one embodiment of a cable tray 32 in a tower 4 for a wind turbine 2. However, the cable tray 32 may be used with a variety of other types of towers and/or in other applications that do not include towers. For example, the cable tray may be used to support fiber optic cable, 24 volt DC cable, 120, 690, or 1000 volt AC cable, co-axial cable, and/or other lines for carrying signals and/or power

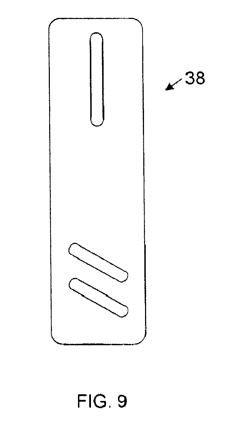

The exemplary cable tray 32 shown here includes a first section 34, a second section 36 spaced apart from the first section. However, any other number of sections may also be provided. As shown in FIGs. 4 and 9, an elastomer member 38 connects the first section to the second section. For example the elastomer member 38 may include Ethylene Propylene Diene Monomer "EPDM" rubber. However, various other elasomers may also be used including, but not limited to Natural Rubber, Polyisoprene, Butyl rubber, Halogenated butyl rubbers, Polybutadiene, Styrenebutadiene rubber, Nitrile rubber, Buna N rubbers, Hydrogenated Nitrile rubbers, Chloroprene rubber, Polychloroprene, Neoprene, Ethylene Propylene rubber, Epichlorohydrin rubber, Polyacrylic rubber, Silicone rubber, Fluorosilicone rubber, Fluoroelastomers, Perfluoroelastomers, Polyether Block Amides, Chlorosulfonated Polyethylene, Ethylene-vinyl acetate, Thermoplastic elastomers, Thermoplastic Vulcanizates, Thermoplastic Polyurethane, Thermoplastic Olefins, Polysulfide Rubber, resilin, and elastin. As shown in FIG. 9, the elastomer member 38 may be configured as a rectangular block or pad with mounting slots for securing to the base plate 42 or walls 44. The elastomer member 38 helps to isolate the first section 34 from the second section 36 and dampen vibrational energy moving between the sections.

A flexible conductor 40 connects the first section 34 and second section 36 in order to provide a path for electrical currents to pass between the two sections. For example, the conductor 40 may include a braided cable or wire. The flexibility of the connector 40 further helps to isolate the first section 34 from the second section 36 and dampen vibrational energy moving between the sections. Alternatively, or in addition, the conductor 40 may be arranged as part of the elastomer member 38. For example, conducting members may be embedded in or secured to the elastomer member 38. The connector 40 may also help to provide a ground path through the cable tray 32. Similarly, the ground bar 28 (shown in FIG. 3) may be removed and the buss tray 24 used to provide an electrical path to ground.

Some or all of the first and second sections 34 and 36 may be configured as the U-shaped trough shown here. For example, a typical U-shaped trough may include a substantially flat base plate 42, and walls 44 arranged on each side of the baseplate. However, other trough shapes may also be used including C-shapes, V-shapes, W-shapes, U-shapes, mutiples thereof such as UU-shapes and VVV-shapes, and/or H-shapes, with or without substantially flat base plates.

Flanges 46 extend from each wall 44 for securing the tray. For example, the flanges 46 may be provided with holes 48 for securing a bracket 50 to the cable tray 32 in order to stabilize and/or otherwise secure the tray 32 against the inside wall of the tower 4. For example, the bracket 50 may be secured to the cable tray 32 with bolts 52 and/or other suitable fasteners. In the illustrated embodiment, the bracket 50 is provided with upturned feet 54 at each end for resting against the interior wall of the tower 4.

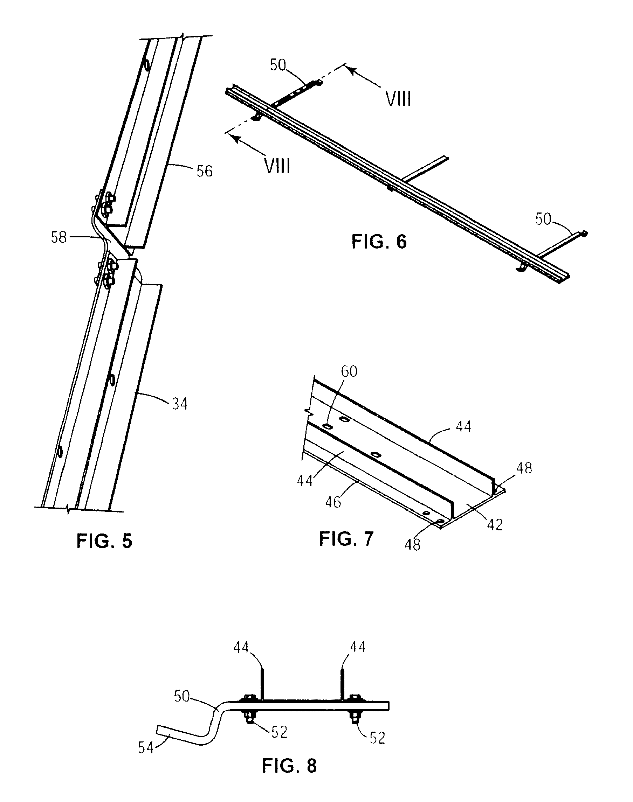

As noted above, any number of sections may also be provided. For example, a third section 56 may be connected to a free end of the first section 34 either directly to the first section or with a coupling 58. As shown in FIG. 5, the coupling 58 may be configured in an S- or stair-step-shaped plate where one of the lands is secured to the base plate 42 of the third section 56 and the other of the lands is secured to the base plate of the first section 34. Slots 60 (FIG. 7) can also be used to secure the cable tray 32 and/or to receive cable ties for securing cables in the tray.

The technology discussed above offers various advantages over conventional approaches. For example, the cable tray 32 is provided without rungs that are otherwise difficult and time consuming to fabricate. The cable tray 32 also offers beneficial vibrational characteristics in that it has a different natural frequency of the tower and provides for isolation and/or damping of vibrational energy moving between the various sections 34, 36, and/or 56. Multiple sections of the tray 32 can also be easily connected using the coupling 58. The cable tray 32 is also easy to use since lines of various sized can simply be laid on the base plate 42 between the walls 44 and then secured with cable ties or other fasteners in the slots 60. The cable tray 32 may be grounded and/or used to support mounted lights or receptacles.

It should be emphasized that the embodiments described above, and particularly any "preferred" embodiments, are merely examples of various implementations that have been set forth here to provide a clear understanding of various aspects of this technology. One of ordinary skill will be able to alter many of these embodiments without substantially departing from scope of protection defined solely by the proper construction of the following claims.

## Claims

1. A cable tray (32) for a wind turbine (2) tower (4), comprising:
a first section (34);
a second section (36) spaced apart from the first section (34); and
an elastomer member (38) connecting the first section (34) to the second section (36).

2. The cable tray (32) recited in claim 1 wherein the elastomer member (38) comprises Ethylene Propylene Diene Monomer.

3. The cable tray (32) recited in any preceding claim, further comprising a flexible conductor (40) for connecting the first and second sections (34, 36).

4. The cable tray (32) recited in any preceding claim, wherein at least one of the first and second sections (34, 36) comprises a U-shaped trough.

5. The cable tray (32) recited in claim 4, wherein the U-shaped trough comprises
a substantially flat base plate (42); and
walls (44) arranged on each side of the base plate (42).

6. The cable tray (32) recited in claim 5, further comprising flanges (46) extending from each wall (44) for securing the tray (32).

7. The cable tray (32) recited in claim 5 or claim 6, further comprising
a third section (56) having a substantially flat base plate (42) and walls (44) arranged on each side of the base plate (42); and
a stair-step-shaped coupling (58) for joining the flat base plate (42) of the third section (56) with the flat base plate (42) at a free end of one of the of one of the first and second sections (34, 36).

8. A wind turbine (2), comprising:
a tower (4);
a generator (14) supported by the tower (4);
a gearbox (12) for driving the generator (14);
a blade (10) for driving the gearbox (12); and
a tray (32) for securing a cable in the tower (4), the tray (32)including
a first section (34);
a second section (36); and
an elastomer member (38) connecting the first section to the second section (34, 36); and
a flexible conductor (40) for connecting the first and second sections (34, 36).

9. The wind turbine (2) recited in claim 8, wherein at least one of the first and second sections (34, 36) comprises a U-shaped trough.

10. The wind turbine (2) recited in claim 9, wherein the U-shaped trough comprises
a substantially flat base plate (42); and
walls (44) arranged on each side of the base plate (42).

11. The wind turbine (2) recited in claim 10, further comprising flanges (46) extending from each wall (44) for securing the tray (32).

12. The wind turbine (2) recited in any of claims 8 to 11, further comprising
a third section (56) having a substantially flat base plate (42) and walls (44) arranged on each side of the base plate (42); and
a stair-step-shaped coupling (58) for joining the flat base plate (42) of the third section (56) with the flat base plate (42) at a free end of one of the of one of the first and second sections (34, 36).

13. The wind turbine (2) recited in any of claims 8 to 12, further comprising
a third section (56) having a substantially flat base plate (42) and walls (44) arranged on each side of the base plate (42); and
a stair-step-shaped coupling (58) for joining the flat base plate (42) of the third section (56) with the flat base plate (42) at a free end of one of the of one of the first and second sections (34, 36).

14. The wind turbine (2) recited in any of claims 8 to 13, further comprising
a third section (56) having a substantially flat base plate (42) and walls (44) arranged on each side of the base plate (42); and
a stair-step-shaped coupling (58) for joining the flat base plate (42) of the third section (56) with the flat base plate (42) at a free end of one of the of one of the first and second sections (34, 36).

15. The wind turbine (2) recited in any of claims 8 to 14, further comprising
a third section (56) having a substantially flat base plate (42) and walls (44) arranged on each side of the base plate (42); and
a stair-step-shaped coupling (58) for joining the flat base plate (42) of the third section (56) with the flat base plate (42) at a free end of one of the of one of the first and second sections (34, 36).
